# EUROPEAN PATENT APPLICATION

(11) **EP 4 786 167 A1**
(43) Date of publication of application: **05.08.2026**
(21) Application number: 25222855.6
(22) Date of filing: 12.12.2025
(51) Int. Cl.: B32B 18/00, C04B 35/80, C04B 35/83, F01D 5/28, F16B 25/00, F16B 39/01

(54) **CERAMIC MATRIX COMPOSITE FASTENERS AND FASTENER SYSTEMS AND METHODS OF FORMING CMC FASTENERS AND FASTENER SYSTEMS**

(30) Priority: 03.02.2025 US 202519043609
(71) Applicant: General Electric Company, Cincinnati, Ohio 45215 (US)
(72) Inventor: BANGERT, Adam, Evendale, 45215 (US); PHELPS, Gregory Scott, Evendale, 45215 (US)
(74) Representative: Openshaw & Co.

(57) **Abstract**

Ceramic matrix composite (CMC) fasteners and fastener systems, as well as methods of forming CMC fasteners and fastener systems, are provided. For example, a CMC fastener includes a CMC material forming a body portion having a first plurality of continuous fibers disposed in a first matrix, and a thread portion having a second plurality of continuous fibers disposed in a second matrix. The body portion has a body length in an axial direction. The thread portion is wound in a helix about the body portion such that the second plurality of continuous fibers wrap about the first plurality of continuous fibers along the axial direction. A CMC fastener system can include the CMC fastener and a CMC threaded nut.

## Description

### FIELD

The present disclosure relates to ceramic matrix composite (CMC) fasteners, such as CMC fasteners and fastener systems for high temperature applications, and methods of manufacturing thereof.

### BACKGROUND

Increasingly, CMCs are used in high temperature environments, such as the operating environment of gas turbine engines as well as other aerospace applications. Typically, CMC materials include ceramic fibers embedded in a matrix material such as silicon carbide (SiC), silicon, silica, alumina, or combinations thereof. Plies of the CMC material may be laid up to form a preform component that may then undergo thermal processing, such as a cure or burn-out to yield a high char residue in the preform, and subsequent chemical processing, such as melt-infiltration with silicon, to arrive at a component formed of a CMC material having a desired chemical composition, which provides high temperature capability useful in high temperature environments.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a cross-sectional view of a CMC fastener system according to exemplary embodiments of the present subject matter.
FIG. 2A is a schematic top view of a first CMC ply for forming a body portion of a CMC fastener according to exemplary embodiments of the present subject matter.
FIG. 2B is a schematic top view of a second CMC material for forming a second CMC ply used to form a thread portion of the CMC fastener according to exemplary embodiments of the present subject matter.
FIG. 3A is a perspective view of tooling for forming a CMC fastener according to exemplary embodiments of the present subject matter.
FIG. 3B is a schematic cross-section view of the tooling of FIG. 3A.
FIG. 4 is a cross-sectional view of a CMC fastener according to exemplary embodiments of the present subject matter.
FIG. 5 is a block diagram of an exemplary method for forming a CMC fastener.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

As used herein, the terms "first," "second," "third," and other ordinals are used to distinguish one component from another and are not intended to signify location or importance of the individual components.

As used herein, ceramic matrix composites or "CMCs" refers to composites comprising a ceramic matrix reinforced by ceramic fibers. Some examples of CMCs acceptable for use herein can include, but are not limited to, materials having a matrix and reinforcing fibers comprising oxides, carbides, nitrides, oxycarbides, oxynitrides and mixtures thereof. Examples of non-oxide materials include, but are not limited to, CMCs with a silicon carbide matrix and silicon carbide fiber (when made by silicon melt infiltration, this matrix will contain residual free silicon); silicon carbide/silicon matrix mixture and silicon carbide fiber; silicon nitride matrix and silicon carbide fiber; and silicon carbide/silicon nitride matrix mixture and silicon carbide fiber. Further, CMCs can have a matrix and reinforcing fibers comprised of oxide ceramics. Specifically, the oxide-oxide CMCs may be comprised of a matrix and reinforcing fibers comprising oxide-based materials such as aluminum oxide (Al₂O₃), silicon dioxide (SiO₂), aluminosilicates, and mixtures thereof. Accordingly, as used herein, the term "ceramic matrix composite" includes, but is not limited to, carbon-fiber-reinforced carbon (C/C), carbon-fiber-reinforced silicon carbide (C/SiC), and silicon-carbide-fiber-reinforced silicon carbide (SiC/SiC). In one embodiment, the ceramic matrix composite material has increased elongation, fracture toughness, thermal shock, and anisotropic properties as compared to a (non-reinforced) monolithic ceramic structure.

In certain embodiments, the reinforcing fibers may be bundled and/or coated prior to inclusion within the matrix. For example, bundles of the fibers may be formed as a reinforced tape, such as a unidirectional reinforced tape; a woven fabric; or the like. The reinforced tape, woven fabric, etc. may be cut into pieces. One or more of the pieces may be laid up to form a preform component. The bundles of fibers may be impregnated with a slurry composition prior to forming the preform or after formation of the preform. The preform may then undergo thermal processing and subsequent chemical processing to arrive at a component formed of a CMC material having a desired chemical composition. For example, the preform may undergo a cure or burn-out to yield a high char residue in the preform, and subsequent melt-infiltration with silicon, or a cure or pyrolysis to yield a silicon carbide matrix in the preform, and subsequent chemical vapor infiltration with silicon carbide. Additional steps may be taken to improve densification of the preform, either before or after chemical vapor infiltration, by injecting it with a liquid resin or polymer followed by a thermal processing step to fill the voids with silicon carbide. CMC material as used herein may be formed using any known or hereinafter developed methods including but not limited to melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer. Moreover, CMCs are also being considered for other high temperature applications, such as applications in which a lightweight material that maintains its strength and durability at elevated temperatures is desirable.

The inventors of the present disclosure sought out a CMC fastener, a CMC fastener system, and their method of manufacture that takes advantage of the strengths of the CMC material system and minimizes its weaknesses.

In particular, the inventors recognized that creating a uniaxial fastener body carries load through the fibers of the composite material and resists shearing at a fastener head. For example, continuous fibers from the fastener head through the shank can reduce or avoid interlaminar defects, such as silicon veining or voiding, that are common in previous fasteners and takes advantage of the high tensile strength of the fibers, which was not fully utilized in previous fasteners in part because the fastener head of previous fasteners does not contain continuous fibers joined to the shank. The inventors recognized, unexpectedly, that such a result could be achieved without the use of an overly complicated fabrication process or complicated tooling.

Further, contrary to previous thinking and expectations, the inventors discovered that wrapping a fastener shank with a ply at the appropriate helix angle allows, when threads are machined, continuous fibers in the threads. As noted, previous thinking was that machined fasteners formed from a panel of CMC material, such as a laminate of differently oriented plies or a woven CMC material, were sufficient to join parts or components formed from a CMC material, but such previous fasteners were limited by the shear strength of the matrix of the composite material, generally having less than 50% fiber volume fraction in the axial direction and less than 50% cantilevered fibers by volume in the threads that were not radially aligned and contained discontinuous axial fibers in the threads. In contrast, the inventors of the present subject matter discovered that a helix ply-wrapped fastener shank has greater resistance to shearing in the threaded region of the fastener as compared to conventional CMC fasteners. The uniaxial fastener body and helix ply-wrapped fastener shank of the present invention increase the number of axial fibers in the direction of the load and increase continuous fibers in the fastener body and in the threads, such as having approximately 75% or more fiber volume fraction in the axial direction. Orienting the reinforcing fibers as discovered by the present inventors takes advantage of the high tensile strength of the fibers and the high compressive strength of the matrix used in the composite material to significantly increase the tensile strength and shear strength of the CMC fastener. Other advantages of the fastener design and manufacturing methods discovered by the inventors, such as reduced interlaminar defects, continuous fibers in the fastener head to advantage of the high tensile strength of the fibers, and increased continuous fibers in the thread region of the fastener are also described below.

Accordingly, with a goal of arriving at an improved CMC fastener, an improved CMC fastener system, and improved methods of manufacturing such CMC fasteners and CMC fastener systems, the inventors proceeded toward a design that takes advantage of the high tensile strength of the reinforcing fibers and the high compressive strength of the ceramic matrix. Over the course of the design process, the inventors refined the CMC fasteners, the CMC fastener systems, and the methods of their manufacture described herein, which are described below in greater detail.

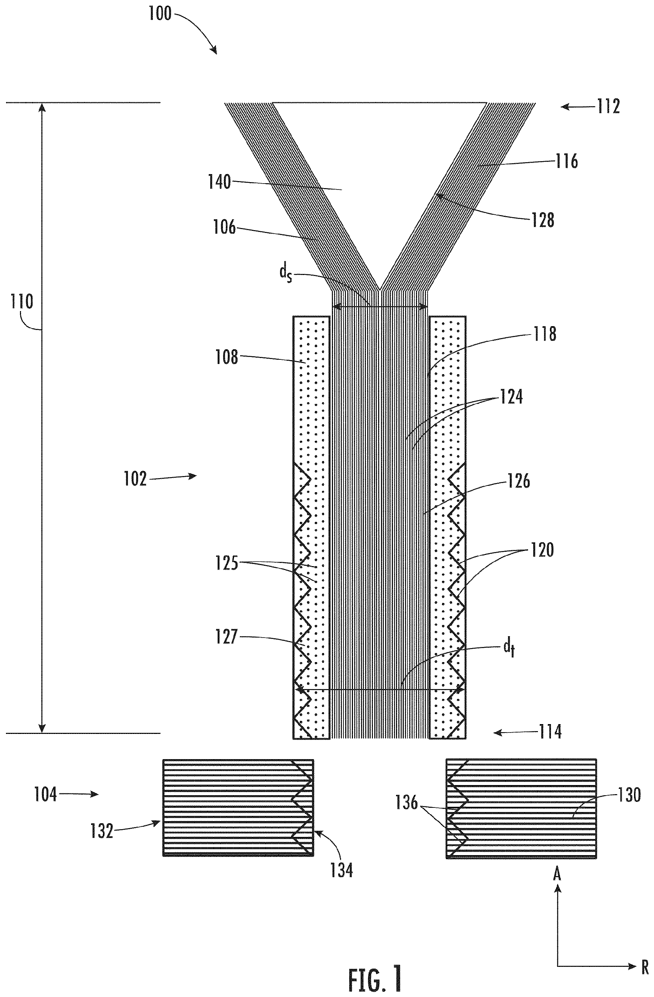

Referring now to the drawings, wherein identical numerals indicate the same elements throughout the figures, FIG. 1 is a cross-sectional view of a CMC fastener system 100. The CMC fastener system 100 includes a CMC fastener 102 and a CMC threaded nut 104. The CMC fastener 102 could be used alone or with the CMC threaded nut 104 as described herein.

The CMC fastener 102 includes a body portion 106 and a thread portion 108. The body portion 106 has a body length 110 in an axial direction A. Further, the body portion 106 defines a first end 112 and a second end 114 opposite the first end 112 along the body length 110. The body portion 106 includes a head 116 formed at the first end 112 and a shank 118 extending from the head 116 along the body length 110.

The thread portion 108 wraps around the shank 118 of the body portion 106. More particularly, the thread portion 108 is wound in a helix about the body portion 106. A plurality of threads 120 are defined in the thread portion 108. The plurality of threads 120 may be defined as described in greater detail below.

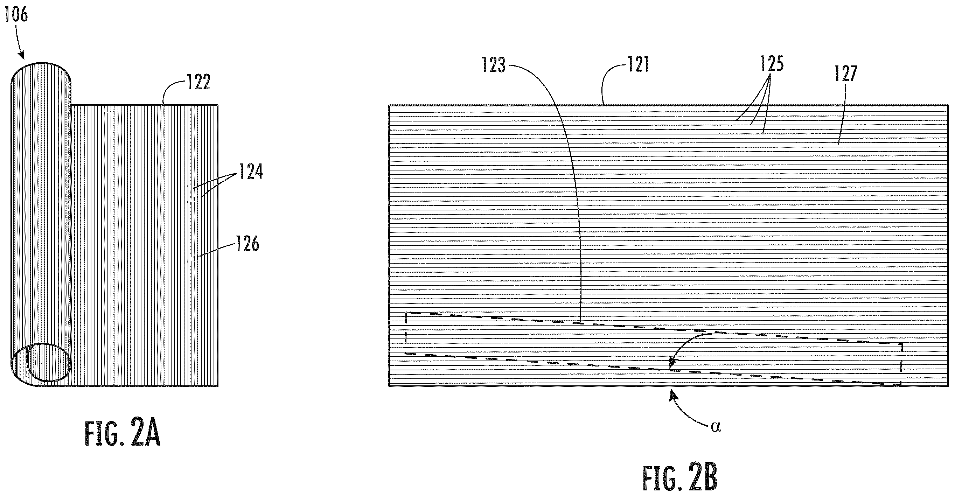

FIG. 2A is a top view of a first CMC material for forming the body portion 106 of the CMC fastener 102, and FIG. 2B is a top view of a second CMC material for forming the thread portion 108 of the CMC fastener 102. More particularly, the first CMC material and the second CMC material can be at least one CMC ply, including a plurality of continuous fibers disposed in a matrix; the body portion 106 and the thread portion 108 may be formed from the same CMC ply or two different CMC plies. Exemplary fiber and matrix materials are discussed above, and the CMC ply or plies may be formed by cutting or forming, to desired dimensions, a unidirectional reinforced tape, a woven prepreg, or the like, which may be formed as described above.

In the embodiment of FIGS. 2A and 2B, a first CMC ply 122 is used to form the body portion 106 of the CMC fastener 102, and a second CMC ply 123 is formed from a second CMC material 121 and used to form the thread portion 108 of the CMC fastener 102 shown in FIG. 1. It will be appreciated that, although not shown in FIG. 2A, the first CMC ply 122 may be cut from a first CMC material, then formed into the body portion 106.

The first CMC ply 122 includes a first plurality of continuous fibers 124 disposed in a first matrix 126, and the second CMC material 121, and the second CMC ply 123 cut therefrom, includes a second plurality of continuous fibers 125 disposed in a second matrix 127. It will be appreciated that, in various embodiments, the first and second CMC plies 122 and 123 may be cut from the same CMC sheet or different CMC sheets, and the first and second CMC plies 122 and 123 may have the same or different fibers and/or matrix material, the same or different fiber to matrix ratio, and/or the same or different density, porosity, etc. Further, although FIGS. 2A and 2B depict CMC plies 122, 123 having unidirectional fibers 124, 125, in some embodiments, one or both of the first CMC ply 122 and the second CMC ply 123 may be a woven ply, having continuous fibers 124, 125 extending in two or more directions.

Referring to FIGS. 1 and 2A, the first plurality of continuous fibers 124 of the body portion 106 extend along the axial direction A. More particularly, the first plurality of continuous fibers 124 of the body portion 106 extend continuously from the first end 112 to the second end 114 of the body portion 106 and extend along the body length 110 in the axial direction A. The first CMC ply 122 may be rolled to form the body portion 106 of the CMC fastener 102, as described in greater detail below.

It will be appreciated that, for embodiments in which the first CMC ply 122 is a woven ply, a portion of the first plurality of continuous fibers 124 of the body portion 106 extend along the axial direction A, and another portion of the first plurality of continuous fibers 124 extend along a different direction. In at least some embodiments, the portion of the first plurality of continuous fibers 124 that extend along the axial direction A may be one-half or more of the first plurality of continuous fibers 124, i.e., 50% or more of the fiber volume of the woven ply may be oriented along the axial direction A when the body portion 106 is formed. For example, 50% or more, 55% or more, 60% or more, 65% or more, 70% or more, or 75% or more of the first plurality of continuous fibers 124 may be oriented along the axial direction A.

The body portion 106, particularly the shank 118, has a cylindrical shape with a circular cross-section in a plane perpendicular to the body length 110. The shank 118 has a shank diameter dₛ in a radial direction R. In some embodiments, the shank diameter dₛ may be at least about 0.200" (two-tenths of an inch), e.g., to accommodate a minimum bend radius of the thread portion 108. As such, the shank diameter dₛ may be 0.200" or larger, such as about 0.250" or larger, about 0.500" or larger, 0.750" or larger, or 1.000" or larger. In some embodiments, the shank diameter dₛ may be within a range of about 0.200" to about 2.00", such as within a range of about 0.500" to about 1.750" or a range of about 0.750" to about 1.500". However, such shank diameter dₛ ranges are by way of example only, and it will be appreciated that the shank diameter dₛ may be any appropriate size that helps avoid forcing the thread portion 108 into a too small bend radius while forming a CMC fastener 102 of the size needed to fasten together two or more components or parts.

Referring to FIGS. 1 and 2B, the second CMC material 121 is shown with a plurality or majority of the second plurality of continuous fibers 125 aligned in the 0-degree direction, which is the horizontal direction in the view of FIG. 2B. The second CMC ply 123 is cut from the second CMC material 121 at an angle α relative to the 0-degree direction such that when the rectangular second CMC ply 123 is aligned perpendicularly to and wrapped around the body portion 106, the second plurality of continuous fibers 125 form the appropriate helix angle for the plurality of threads 120 of the CMC fastener 102.

The second plurality of continuous fibers 125 of the thread portion 108 helically wrap about the first plurality of continuous fibers 124 along the axial direction A. As stated, the second CMC ply 123 is wound in a helix about the body portion 106 to form the thread portion 108, and the second plurality of continuous fibers 125 are thus helically wrapped about the first plurality of continuous fibers 124 of the body portion 106 that extend along the axial direction A. In some embodiments, a majority of all of the fibers of the second CMC ply 123 is wrapped with the same helix angle or within about 3 degrees, such as within about 2 degrees or within about 1 degree, of the helix angle of the threads to be formed on the thread portion 108. For example, at least 50%, such as at least 55%, at least 60%, at least 70%, at least 75%, or more, of the fibers in the second ply 123 are aligned and are wrapped to be helical to the axial direction A.

The plurality of threads 120 are machined into the thread portion 108 such that at least a portion (e.g., over 50%, 75%, 90%, etc.) of the second plurality of continuous fibers 125 remain unbroken and wound in the helix about the body portion 106 over at least a portion of the body length 110. More specifically, by wrapping the thread portion 108 about the body portion 106 as described above, at least some of the continuous fibers 125 of the second CMC material 121 forming the thread portion 108 can remain continuous over several revolutions of the threads 120 even after the plurality of threads 120 are defined in the thread portion 108. As described herein, the thread portion 108 can be cut from the second ply 123 at an appropriate helix angle α to increase the number of continuous fibers 125 that remain in the thread portion 108 after forming the plurality of threads 120 (i.e., to increase the number of continuous fibers 125 that remain continuous over at least a portion of the body length 110 such that the remaining continuous fibers 125 are helically wound about the body portion 106). As such, the uncut fibers 125 can be continuous over the entire length of the threads 120 or over a portion of the length of the threads 120; those fibers 125 that remain continuous over a portion of the length of the threads 120 may be referred to an "partially continuous" uncut fibers 125, and such "partially continuous" uncut fibers 125 remain helically wound about the body portion 106. Maintaining continuous fibers in the body portion 106 and the thread portion 108, even for "partially continuous" fibers in the thread portion 108, takes advantage of the relatively high tensile strength of the reinforcing fibers of the CMC material to increase the strength of the CMC fastener 102 and increase damage tolerance.

An appropriate helix angle α can be determined based on the desired diameter and thread count of the CMC fastener 102. For example, the helix angle α of a ½-13 thread CMC fastener 102 (i.e., a CMC fastener 102 having a one-half inch diameter and 13 threads) is 3.11°. In this example, the pitch is 1/13" and the pitch diameter for a 0.500" fastener is 0.450", and the helix angle α can be determined based on the following equation: α = atan(pitch / (pitch diameter * π)). Cutting the second CMC ply 123 from the second CMC material 121 at the helix angle α will ensure that once the second CMC ply 123 is aligned perpendicularly to the shank 118 and wrapped, the plurality of threads 120 defined therein will contain continuous fibers as described above.

The plurality of threads 120 can be defined in the thread portion 108 using any suitable technique or process. For instance, the plurality of threads 120 can be machined in the thread portion 108 by cutting, grinding, or the like. Further, the plurality of threads 120 can be defined at any appropriate thread angle.

Referring still to FIG. 1, the plurality of threads 120 have an outer thread diameter dₜ. As described above, the thread portion 108, formed from a composite ply such as second CMC ply 123 of FIG. 2B, wraps in a helix about the body portion 106 of the CMC fastener 102. For some CMC materials, the second plurality of continuous fibers 125 of the second CMC ply 123 forming the thread portion 108 should not be forced into a radius smaller than about 0.100". Thus, a bend radius of the helical wrap ply or plies sets a practical limit to a minimum diameter of the CMC fastener 102 and a minimum outer thread diameter dₜ. For example, the minimum outer thread diameter dₜ may be about 0.375", such that the outer thread diameter dₜ is at least about 0.375". That is, the outer thread diameter dₜ may be about 0.375" or larger, such as about 0.400", about 0.500", about 0.750", about 1.000", or larger.

As stated above and as shown in FIG. 1, in addition to the CMC fastener 102, the CMC fastener system 100 includes a CMC threaded nut 104. The CMC threaded nut 104 is formed from a CMC material, which can be the same as or different from the CMC material used to form the CMC fastener 102. For instance, the CMC material used to form the CMC fastener 102 may be a first CMC material, and the CMC material used to form the CMC threaded nut 104 may be a second CMC material. In some embodiments, the first CMC material is the same as the second CMC material, i.e., the first and second CMC materials use the same reinforcing fibers and the same matrix. In other embodiments, the first CMC material is different from the second CMC material, i.e., the reinforcing fibers and/or the matrix of the first CMC material is different from the reinforcing fibers and/or the matrix of the second CMC material. In still other embodiments, the CMC fastener 102 is formed from multiple CMC materials, and the CMC threaded nut 104 may be formed from a CMC material that is the same as one of the CMC materials used to form a portion of the CMC fastener 102 or is different from the multiple CMC materials used to form the CMC fastener 102. For example, the body portion 106 may be formed from a first CMC material, the thread portion 108 may be formed from a second CMC material, and the CMC threaded nut 104 may be formed from a third CMC material.

In any event, the CMC material of the CMC threaded nut 104 forms a nut body 130 receivable on the thread portion 108 of the CMC fastener 102. As shown in the embodiment of FIG. 1, the nut body 130 has a hollow cylinder shape that includes an outer surface 132 and an inner surface 134. A plurality of nut threads 136 are defined on the inner surface 134. Of course, the nut body 130 need not be a hollow cylinder shape but can be any suitable shape for defining nut threads 136 thereon to thread the CMC threaded nut 104 onto the CMC fastener 102.

In at least some embodiments, the CMC threaded nut 104 is formed from a panel of CMC material. For example, a plurality of plies of a CMC material can be stacked together, such as in a 0/90 lay-up, to form a panel from which the CMC threaded nut 104 is machined using any appropriate machine or process. However, in other embodiments, the CMC thread nut 104 may be formed from CMC material in other ways as well; as one example, the nut body 130 may be formed by wrapping a CMC ply in a manner similar to the thread portion 108 of the CMC fastener 102 to form a hollow cylinder, which is then machined to define the nut threads 136. The nut threads 136 may be machined using a cutting, grinding, or other suitable process and may be formed at an angle complementary to an angle of the plurality of threads 120 of the CMC fastener 102.

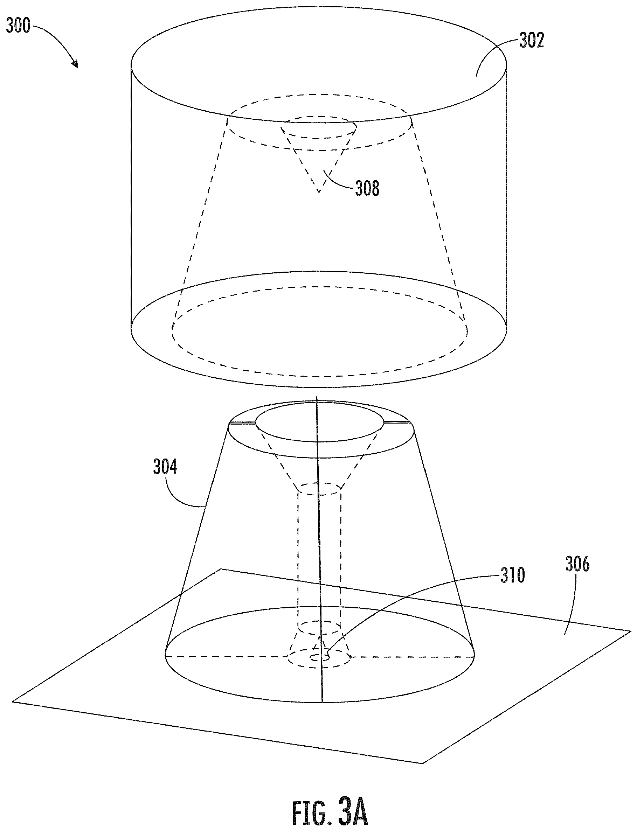

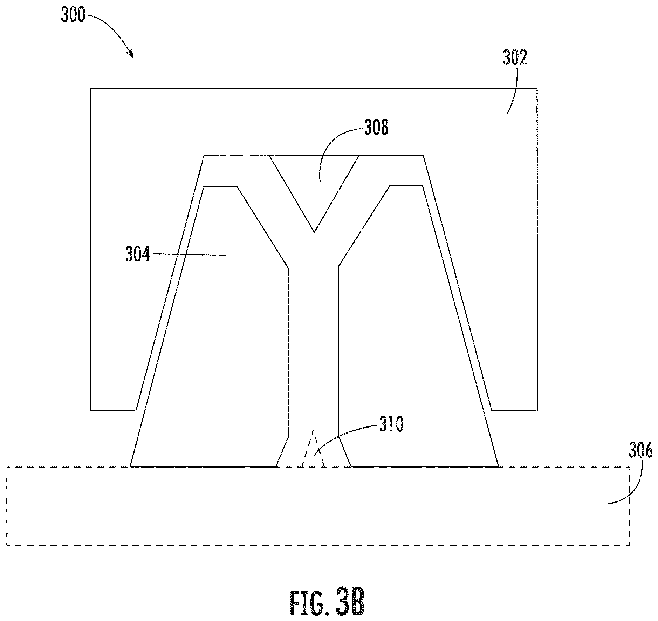

Referring still to FIG. 1, the head 116 of the CMC fastener 102 flares outward from the shank 118 of the CMC fastener 102. In some embodiments, the head 116 is swaged at the first end 112 of the body portion 106. For instance, tooling 300 such as shown in FIGS. 3A and 3B can be used to form the head 116 at the first end 112 of the body portion 106, where FIG. 3A provides a perspective view of the tooling 300 and FIG. 3B provides a schematic cross-section view of the tooling 300. The depicted tooling 300 includes a first indenter 302, a multi-piece split collet die 304, and, optionally, a second indenter 306 to form the body portion of a CMC fastener, such as the body portion 106 of the CMC fastener 102. The first indenter 302 includes a cap 308 to swage the head 116 of the body portion 106. The cap 308 may have a conical shape to form a conical head 116, but other shapes of the cap 308 may also be used to form fastener heads 116 having other shapes. As shown in FIGS. 3A and 3B, multi-piece split collet die 304 is also received in the first indenter 302, which pushes the pieces of the die 304 together to provide equiaxial pressure on the body portion 106 of the CMC fastener 102. Further, in some embodiments, the CMC fastener 102 can remain within the tooling 300 during consolidation, which is described in greater detail below, and a bag pressure applied during consolidation can push the first indenter 302 down on the multi-piece split collet die 304 to consolidate the shank 118 and swage the head 116.

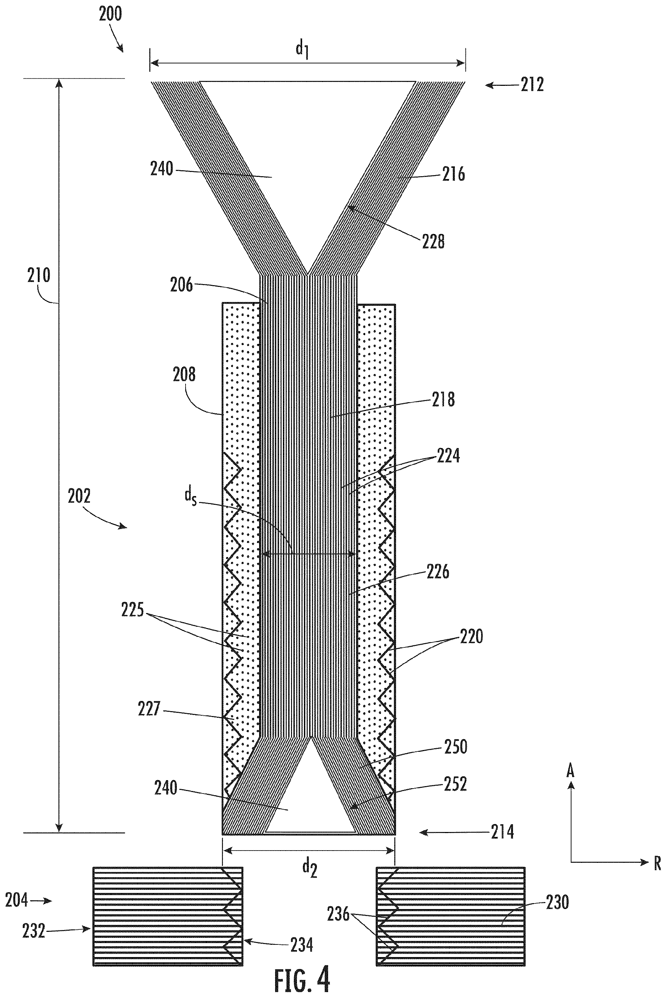

As previously stated, the second indenter 306 of the tooling 300 is optional. As described in greater detail with respect to FIG. 4, the second indenter 306 includes a second cap 310. The second cap 310 is used to swage an interlock feature 250 at a second end 214 of a shank 218 of another embodiment of a CMC fastener, a CMC fastener 202. Thus, the second indenter 306 may be included only in embodiments in which the second cap 310 is needed, e.g., to swage an interlock feature 250. In still other embodiments, the second indenter 306 without the second cap 310 may be included in embodiments of a CMC fastener not including a second swaged end. In such embodiments, the second indenter 306 is not used to indent the fastener but, for example, may support the other pieces of the tooling 300 during formation of the head of the CMC fastener and/or during processing of the CMC fastener.

By swaging the head 116 at the first end 112 of the body portion 106, the first plurality of continuous fibers 124 of the CMC material used to form the body portion 106 remain continuous from the first end 112 to the second end 114. That is, the head 116 is formed from the same continuous fibers 124 as the shank 118; the head 116 is not a separate part that is attached to the shank 118. Continuous fibers 124 extending through both the head 116 and the shank 118, particularly along the axial direction A as shown in the embodiment of FIG. 1, increases the number of fibers that extend in the direction of the load on the CMC fastener 102. In this way, the CMC fastener 102 takes advantage of the relatively high tensile strength of the fibers as well as the relatively high compressive strength of the matrix of the CMC material used to form the CMC fastener 102.

Further, in the embodiment of FIG. 1, the head 116 has a hollow conical shape defining a recess 128. The hollow conical shape of the head 116 is defined by the first plurality of continuous fibers 124 and the first matrix 126. That is, the first CMC material of the body portion 106 is formed, e.g., using the tooling 300 as discussed with respect to FIGS. 3A and 3B, into the hollow conical shape such that first CMC material defines the shape of the head 116.

In the embodiment of FIG. 1, the recess 128 is filled with a ceramic material 140, which may be a third CMC material where the CMC fastener 102 is formed from a first CMC material and the CMC threaded nut 104 is formed from a second CMC material. The ceramic material 140 disposed in the recess 128 can be the same CMC material as the CMC material used to form the CMC fastener 102, or the ceramic material 140 can be different from the CMC material used to form the CMC fastener 102. For example, in embodiments in which the ceramic material 140 is different from the CMC material of the CMC fastener 102, the ceramic material 140 can be a monolithic ceramic material that does not include reinforcing fibers, or the ceramic material 140 can use different reinforcing fibers and/or matrix from the CMC material of the CMC fastener 102. In still other embodiments, the recess 128 remains unfilled, e.g., the ceramic material 140 could be omitted.

Turning now to FIG. 4, another embodiment is illustrated of a CMC fastener system 200 that includes a CMC fastener 202 and a CMC threaded nut 204. The CMC fastener 202 of FIG. 4 includes an optional retention feature, referred to herein as interlock feature 250. Generally, the interlock feature 250 is a flared portion of a shank 218 of the CMC fastener 202 that can help retain a thread portion 208 on a body portion 206 of the CMC fastener 202.

It will be appreciated that similar reference numerals used with respect to the embodiment of FIG. 4 as used with respect to the embodiment of the CMC fastener system 100 of FIG. 1 denote the same or similar features. For example, as described above, the CMC fastener 202 shown in FIG. 4 includes a body portion 206 and a thread portion 208. The body portion 206 has a body length 210 in an axial direction A and defines a first end 212 and a second end 214 opposite the first end 212 along the body length 210. The body portion 206 includes a head 216 formed at the first end 212 and a shank 218 extending from the head 216 along the body length 210. The interlock feature 250 is formed at the second end 214 such that the shank 218 extends between the head 216 and the interlock feature 250.

The thread portion 208 wraps around the shank 218 and the interlock feature 250 of the body portion 206. More particularly, the thread portion 208 is wound in a helix about the body portion 206. A plurality of threads 220 are defined in the thread portion 208. The plurality of threads 220 may be defined as described above with respect to the plurality of threads 120 illustrated in FIG. 1.

The CMC fastener 202 can be formed from a CMC material in a manner described with respect to FIGS. 2A and 2B and the at least one CMC ply used to form the body portion 106 and thread portion 108 of the CMC fastener 102. For example, the CMC fastener 202 can be formed from at least one CMC ply, such as from a first CMC ply including a first plurality of continuous fibers 224 disposed in a first matrix 226 and a second CMC ply including a second plurality of continuous fibers 225 disposed in a second matrix 227, as shown in FIG. 4. As previously discussed, the one or more CMC plies may be formed by cutting or forming to desired dimensions a unidirectional reinforced tape, a woven prepreg, or the like having a plurality of continuous fibers therein, which may be formed using exemplary fiber and matrix materials described above.

Continuing with FIG. 4, the first plurality of continuous fibers 224 of the body portion 206 extend along the axial direction A. More specifically, the first plurality of continuous fibers 224 of the body portion 206 extend continuously from the first end 212 to the second end 214 of the body portion 206 and extend along the body length 210 in the axial direction A. A CMC ply, such as the first CMC ply 122 described above, may be rolled to form the body portion 206 of the CMC fastener 202, as described in greater detail below. The body portion 206, particularly the shank 218, can have a cylindrical shape with a circular cross-section in a plane perpendicular to the body length 210. In embodiments in which the body portion 206 is formed from a woven fiber ply, at least a portion of the first plurality of continuous fibers 224 extend along the axial direction A. As described in greater detail above, in at least some embodiments utilizing woven fiber plies, 50% or more of the first plurality of continuous fibers 224 in the woven fiber ply may be oriented along the axial direction A, e.g., a majority of the fibers 224 may be oriented along the axial direction A.

The thread portion 208 is formed from a second plurality of continuous fibers 225 that helically wrap about the first plurality of continuous fibers 224 of the body portion 206 along the axial direction A. For example, at least a portion of a CMC ply, having the second plurality of continuous fibers 225 disposed in a second matrix 227, is aligned perpendicularly to and wrapped around the body portion 206 such that the CMC ply is wound in a helix about the body portion 206 to form the thread portion 208. The plurality of threads 220 are defined in the thread portion 208 (e.g., by machining) such that at least a portion (e.g., over 50%, 75%, 90%, etc.) of the second plurality of continuous fibers 225 remain unbroken and wound in the helix about the body portion 206 over at least a portion of the body length 210. More particularly, by wrapping the thread portion 208 about the body portion 206, at least some of the continuous fibers 225 of the CMC material forming the thread portion 208 can remain continuous even after the plurality of threads 220 are defined in the thread portion 208. As described in greater detail elsewhere herein, the CMC ply used to form the thread portion 208 can be cut at an appropriate helix angle to increase the number of continuous fibers 225 that remain in the thread portion 208 after forming the plurality of threads 220 (i.e., to increase the number of continuous fibers 225 that remain continuous and helically wound over at least a portion of the body length 210) and thereby take advantage of the relatively high tensile strength of the reinforcing fibers of the CMC material to increase the strength of the CMC fastener 202.

Referring still to FIG. 4, the head 216 of the CMC fastener 202 flares outward from the shank 218. In some embodiments, the head 216 is swaged at the first end 212 of the body portion 206. For instance, the tooling 300 shown in FIGS. 3A and 3B can be used to form the head 216 at the first end 212 of the body portion 206 in a manner similar to that described above with respect to the CMC fastener 102. The head 216 has a hollow conical shape defining a recess 228. The recess 228 is filled with a ceramic material 240, which may be a third CMC material where the CMC fastener 202 is formed from a first CMC material and the CMC threaded nut 204 is formed from a second CMC material. The ceramic material 240 disposed in the recess 228 can be the same CMC material as the CMC material used to form the CMC fastener 202, or the ceramic material 240 can be different from the CMC material used to form the CMC fastener 202. For example, in embodiments in which the ceramic material 240 is different from the CMC material of the CMC fastener 202, the ceramic material 240 can be a monolithic ceramic material that does not include reinforcing fibers, or the ceramic material 240 can use different reinforcing fibers and/or matrix from the CMC material of the CMC fastener 202. In still other embodiments, the recess 228 remains unfilled, e.g., the ceramic material 240 could be omitted.

Moreover, in the embodiment shown in FIG. 4, the CMC fastener 202 includes the interlock feature 250 opposite the head 216. That is, the head 216 of the CMC fastener 202 is formed at the first end 212 of the body portion 206, and the interlock feature 250 is formed at the second end 214 of the body portion 206. As such, the shank 218 extends between the head 216 and the interlock feature 250.

The interlock feature 250 can be swaged in a similar fashion as the head 216 of the CMC fastener 202, e.g., as described with respect to the head 116 of the CMC fastener 102 of the embodiment of FIG. 1. By swaging the head 216 at the first end 212 of the body portion 206 and swaging the interlock feature 250 at the second end 214 of the body portion 206, the first plurality of continuous fibers 224 of the CMC material used to form the body portion 206 remain continuous from the first end 212 to the second end 214. That is, the head 216 is formed from the same continuous fibers 224 as the shank 218 and the interlock feature 250; the head 216 and the interlock feature 250 are not separate parts that are attached to the shank 118. Continuous fibers 224 extending through the head 216, the shank 218, and the interlock feature 250, particularly along the axial direction A as shown in the embodiment of FIG. 4, increases the number of fibers that extend in the direction of the load on the CMC fastener 202. In this way, the CMC fastener 202 takes advantage of the relatively high tensile strength of the fibers as well as the relatively high compressive strength of the matrix of the CMC material used to form the CMC fastener 202.

As depicted in FIG. 4, the head 216 can have a first diameter d₁ in a radial direction R, and the interlock feature 250 can have a second diameter d₂ in the radial direction R. In at least some embodiments, the second diameter d₂ of the interlock feature 250 is smaller than the first diameter d₁ of the head 216, i.e., the first diameter d₁ of the head 216 is greater than the second diameter d₂ of the interlock feature 250 such that the head 216 is larger than the interlock feature 250. However, in other embodiments, the first diameter d₁ is the same as the second diameter d₂, and in still other embodiments, the first diameter d₁ is smaller than the second diameter d₂. Further, as shown in FIG. 4, the second diameter d₂ of the interlock feature 250 can be the same as the outer thread diameter dₜ.

Similar to the head 216 of the CMC fastener 202, the interlock feature 250 has a hollow conical shape defining a recess 252. The hollow conical shape of the interlock feature 250 is defined by the first plurality of continuous fibers 224 and the first matrix 226 at the second end 214 of the CMC fastener 202, e.g., using the tooling 300 as discussed with respect to FIGS. 3A and 3B to form the rolled CMC ply into the shape of the interlock feature 250. A second cap 310 may be used to form an interlock feature 250 having a different size from the head 216, e.g., the second cap 310 may have a different diameter from a diameter of the cap 308, or the second cap 310 may be inserted to a different depth along the body length 210 at the second end 214 of the CMC fastener 202 than at the first end 212 to define a head 216 and an interlock feature 250 having different diameters. Of course, in some embodiments, the head 216 and the interlock feature 250 have the same diameter and may be formed using, e.g., caps 308, 310 having the same diameter and/or inserted to the same depth.

Referring still to FIG. 4, the depicted CMC fastener system 200 also includes the CMC threaded nut 204; however, in appropriate embodiments, the CMC fastener 202 could be used without the CMC threaded nut 204. Similar to the embodiment of the CMC threaded nut 104, the CMC threaded nut 204 is formed from a CMC material, which can be the same as or different from the CMC material used to form the CMC fastener 202, i.e., the reinforcing fibers and/or the matrix of the CMC material of the CMC threaded nut 204 is the same as or different from the reinforcing fibers and/or the matrix of the CMC material of the CMC fastener 202.

In any event, the CMC threaded nut 204 forms a nut body 230 receivable on the thread portion 208 of the CMC fastener 202. As shown in the embodiment of FIG. 4, the nut body 230 has a hollow cylinder shape that includes an outer surface 232 and an inner surface 234. A plurality of nut threads 236 are defined on the inner surface 234. Of course, the nut body 230 need not be a hollow cylinder shape but can be any suitable shape for defining nut threads 236 thereon to thread the CMC threaded nut 204 onto the CMC fastener 202.

In at least some embodiments, the CMC threaded nut 204 is formed from a panel of CMC material. For example, a plurality of plies of the CMC material can be stacked together, e.g., in a 0/90 ply lay-up, to form a panel from which the CMC threaded nut 204 is machined using any appropriate machine or process. However, as described above with respect to the CMC threaded nut 104, the CMC thread nut 204 need not be formed from a 0/90 panel but can be formed from the CMC material arranged in other ways as well, such as a wrapped body similar to the wrapped thread portion of the CMC fastener 202. The nut threads 236 may be machined using a cutting, grinding, or other suitable process and may be formed at an angle complementary to an angle of the plurality of threads 220 of the CMC fastener 202.

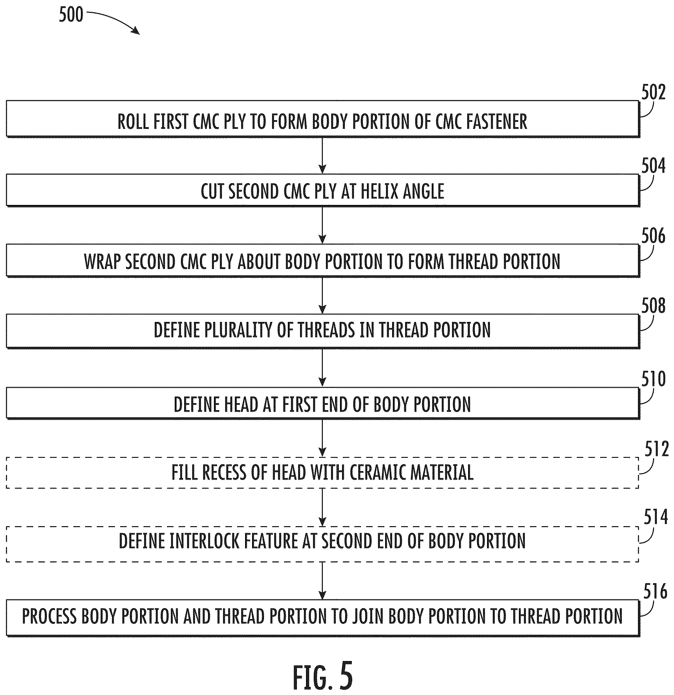

Turning now to FIG. 5, a flow diagram of a method 500 of manufacturing a CMC component in accordance with an exemplary aspect of the present disclosure is provided. The method 500 of FIG. 5 may be utilized to form one or more of the exemplary CMC fasteners and CMC fastener systems described above with reference to FIGS. 1 through 4. Accordingly, it will be appreciated that the method 500 may generally be utilized to form a CMC fastener and/or a CMC fastener system as described above. However, in other exemplary aspects, the method 500 may additionally or alternatively be utilized to manufacture any other suitable CMC fastener or fastener system. In addition, although FIG. 5 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present subject matter.

As depicted, the method 500 includes at (502) rolling a first CMC ply of a CMC material to form a body portion of the CMC fastener. As described above, the first CMC ply can have a first plurality of continuous fibers disposed in a first matrix. Rolling the first CMC ply to form the body portion orients the first plurality of continuous fibers along a body length of the body portion. The body length extends in an axial direction, e.g., as described with respect to FIGS. 1 and 4. Thus, rolling the first CMC ply to form the body portion includes turning the first CMC ply over and over on itself about the axial direction, orienting the continuous fibers along the axial direction. Rolling a ply to form the body portion of the CMC fastener can reduce or avoid common interlaminar defects like silicon veining or voiding, which could be present in previously known fasteners, such as fasteners machined from a panel of CMC material.

The method 500 further includes at (504) cutting a second CMC ply of the CMC material at a helix angle and at (506) wrapping the second CMC ply about the body portion to form a thread portion. In at least some embodiments, when wrapped about the body portion, a majority of continuous fibers in the second CMC ply winds in a helix about the body portion. As described with respect to FIG. 2B, the second CMC ply can have a second plurality of continuous fibers disposed in a second matrix. By cutting the second CMC ply at the helix angle, the threads of the CMC fastener can be formed at an appropriate angle while also retaining in the threads an uncut portion of the second plurality of continuous fibers extending in the helix about the body portion. Maintaining continuous fibers in the CMC material of the body portion and the thread portion helps increase the strength of the CMC fastener as described above.

In some embodiments, the first CMC ply and the second CMC ply can be formed from the same unidirectional reinforced tape, from the same woven fiber prepreg, etc. For example, a first segment of a unidirectional reinforced tape may be used to form the body portion of the CMC fastener, and the thread portion of the CMC fastener may be cut from a second segment of the unidirectional reinforced tape. In other embodiments, the first CMC ply and the second CMC ply can be formed from different unidirectional reinforced tapes, from different woven fiber prepregs, etc., or one of the first CMC ply or the second CMC ply may be formed from a unidirectional tape while the other of the first CMC ply or the second CMC ply is formed from a woven fiber prepreg. In still other embodiments, one or both the first CMC ply and the second CMC ply may be formed from another CMC material having continuous fibers substantially extending in a single direction that are disposed in a ceramic matrix material. For instance, the CMC material may have more than 50% of continuous fibers substantially extending in a single direction, which can be oriented along the axial direction A when forming the body portion of the CMC fastener as described above or can be wound about the body portion to have a majority of the continuous fibers remain uncut after threads are defined in the wrapped CMC material.

Keeping with FIG. 5, the method 500 includes at (508) defining a plurality of threads in the thread portion. As described above, defining the plurality of threads may include machining the plurality of threads into the second CMC ply. For instance, the plurality of threads may be cut, ground, or otherwise machined into the second CMC ply. Any suitable number of threads defined at an appropriate thread angle may be formed in the second CMC ply.

The body portion of the CMC fastener defines a first end and a second end opposite the first end along the body length, which extends along axial direction. The method 500 includes at (510) defining a head at the first end of the body portion. In at least some embodiments, defining the head of the CMC fastener at the first end includes swaging the body portion to define the head, such that the head is formed from the material of the body portion. For example, tooling such as the tooling described with respect to FIGS. 3A and 3B can be used to swage a head having a conical shape defining a recess. Optionally, the method 500 includes at (512) filling the recess with a ceramic material. In some embodiments, the ceramic material is a monolithic ceramic, but the ceramic material could be a CMC material or the like. In appropriate embodiments, (512) filling the recess may be omitted.

In some embodiments, the method 500 optionally includes at (514) defining an interlock feature at the second end of the body portion. As described in greater detail above, the interlock feature may be swaged at the second end of the body portion, e.g., in a manner similar to how the head is formed at the first end of the body portion, such that the interlock feature is formed from the material of the body portion. Swaging the head, and when included, the interlock feature, helps maintain continuous fibers through the body portion of the CMC fastener, with the continuous fibers generally oriented along the axial length of the body parallel to the axial direction. Maintaining the continuous fibers along the axial length of the CMC fastener helps improve the strength of the CMC fastener. Further, it will be appreciated that (514) defining the interlock feature can include filling a recess of the interlock feature with a ceramic material, such as a monolithic ceramic material or a fiber reinforced ceramic material, as described herein.

As discussed above, the interlock feature can help retain the thread portion on the body portion of the CMC fastener. However, in some embodiments, (514) defining the interlock feature may be omitted. Similarly, the CMC fastener may be used with a CMC threaded nut to form a CMC fastener system, or in some embodiments, the CMC threaded nut may be omitted. The CMC threaded nut may be formed by stacking plies of a CMC material, or pieces of a reinforced tape, along a stacking direction to form a CMC panel; as described herein, the CMC threaded nut may be formed in other ways as well. The CMC material of the CMC threaded nut may be machined to define the threaded nut, e.g., such that the CMC threaded nut includes a nut body having an outer surface and an inner surface and a plurality of nut threads defined along the inner surface of the nut body. The nut body may then be processed, such as described in greater detail below with respect to the CMC fastener, to form the final CMC threaded nut.

As further illustrated in FIG. 5, the method 500 includes at (516) processing the body portion and the thread portion to form the CMC fastener, in which the body portion is joined to the thread portion in a manner that the body portion and the thread portion are a single part or component, i.e., the CMC fastener. Prior to processing, the CMC plies of the body portion and the thread portion are composite plies that are in an unheated or "green" state. For example, as shown in FIG. 1, at least one composite ply forms the body portion 106 and at least one other composite ply (or a section taken from the same composite ply used to form the body portion 106) separately forms the thread portion 108. The composite ply or plies of the body portion 106 may have the same composition (e.g., be formed of the same CMC material) as the composite ply or plies forming the thread portion 108.

After wrapping the thread portion about the body portion as described above, the green body portion and the green thread portion are processed, e.g., to densify the body portion and the thread portion and to irreversibly join together the body portion and the thread portion. Processing the body portion and the thread portion can be a single process or may be multiple processes. For instance, in some embodiments, processing the body portion and the thread portion includes thermally processing and/or chemically processing the body portion and the thread portion. As one example, processing the body portion with the thread portion wrapped about the body portion includes autoclaving the body and thread portions to form an autoclaved part. That is, the body portion and the thread portion may be debulked and consolidated, e.g., at elevated temperatures and pressures in an autoclave, to adhere or laminate the plurality of layers together, including laminating the layer(s) of the body portion to the layer(s) of the thread portion. As described above, in some embodiments, the CMC fastener may be autoclaved while disposed in the tooling 300; in such embodiments, the tooling 300 with the CMC fastener therein may be disposed in a bag, which is pulled against the tooling 300 as pressure is increased in the autoclave, and the bag pressure on the tooling 300 can help consolidate the body portion and the thread portion of the CMC fastener.

In some embodiments, the autoclaved part may undergo further processing, e.g., densification and finishing processes, following the autoclave process. For example, the autoclaved part may be heated (fired) in a vacuum or inert atmosphere to decompose the binders, remove the solvents, and convert the precursor in the plies to the desired ceramic matrix material. Due to decomposition of the binders, the result is a porous CMC fired body that may undergo densification, e.g., melt infiltration (MI), to fill the porosity and yield the CMC fastener.

Specific processing techniques and parameters for the thermal and/or chemical processing of the CMC fastener, having a body portion and a thread portion as described herein, will depend on the particular composition of the materials. As an example, other known methods or techniques for curing composite plies, as well as for densifying a CMC component, may be utilized, such as a pyrolysis process, a chemical vapor infiltration process, a sintering process, etc. For instance, as known in the art, the body portion with the thread portion wrapped thereabout may undergo a melt infiltration process in which a matrix is melted to infiltrate a porous preform; a chemical vapor infiltration process in which a gaseous precursor infiltrates the preform and decomposes to form the ceramic matrix; an autoclaving process in which heat and pressure are applied to cure an infiltrated preform; and/or a pyrolysis process in which heat is applied in an inert atmosphere to transform an infiltrated polymer to a ceramic matrix.

Further aspects are provided by the subject matter of the following clauses:
A ceramic matrix composite (CMC) fastener comprising a first CMC material forming a body portion comprising a first plurality of continuous fibers disposed in a first matrix; and a second CMC material forming a thread portion comprising a second plurality of continuous fibers disposed in a second matrix, wherein the body portion has a body length in an axial direction, and wherein the second plurality of continuous fibers is wound in a helix about the body portion such that the second plurality of continuous fibers wrap about the first plurality of continuous fibers along the axial direction.

The CMC fastener of any preceding clause, wherein the first plurality of continuous fibers extend along the body length in the axial direction.

The CMC fastener of any preceding clause, wherein the body portion defines a first end and a second end opposite the first end along the body length, and wherein the body portion includes a head formed at the first end and a shank extending from the head along the body length.

The CMC fastener of any preceding clause, wherein the head is swaged at the first end of the body portion.

The CMC fastener of any preceding clause, wherein the head has a hollow conical shape defining a recess, and wherein the recess is filled with a ceramic material.

The CMC fastener of any preceding clause, wherein the body portion further includes an interlock feature swaged at the second end of the body portion such that the shank extends between the head and the interlock feature.

The CMC fastener of any preceding clause, wherein the first CMC material is the same as the second CMC material.

The CMC fastener of any preceding clause, wherein at least one of the first CMC material or the second CMC material is a unidirectional reinforced tape.

The CMC fastener of any preceding clause, wherein at least one of the first CMC material or the second CMC material is a woven fiber.

The CMC fastener of any preceding clause, wherein the head has a first diameter and the interlock feature has a second diameter, and wherein the first diameter is greater than the second diameter.

The CMC fastener of any preceding clause, wherein a plurality of threads are defined in the thread portion, and wherein the plurality of threads are machined into the thread portion such that at least a portion of the second plurality of continuous fibers remain unbroken and wound in the helix about the body portion along at least a portion of the body length.

The CMC fastener of any preceding clause, wherein the body portion includes a shank, the shank having a cylindrical shape with a circular cross-section in plane perpendicular to the body length.

The CMC fastener of any preceding clause, wherein the CMC fastener is part of a CMC fastener system, the CMC fastener system further including a CMC threaded nut comprising a third CMC material, the third CMC material forming a nut body receivable on the thread portion of the CMC fastener.

A method of forming a ceramic matrix composite (CMC) fastener comprising rolling a first CMC ply of a first CMC material to form a body portion, the first CMC ply having a first plurality of continuous fibers disposed in a first matrix; wrapping a second CMC ply of a second CMC material about the body portion to form a thread portion, the second CMC ply having a second plurality of continuous fibers disposed in a second matrix, the second plurality of continuous fibers winding in a helix about the body portion; and processing the body portion and the thread portion to join the body portion to the thread portion, wherein rolling the first CMC to form the body portion orients the first plurality of continuous fibers along a body length of the body portion, the body length extending in an axial direction.

The method of any preceding clause, further comprising, prior to processing the body portion and the thread portion, defining a plurality of threads in the thread portion.

The method of any preceding clause, further comprising, prior to wrapping the second CMC ply about the body portion, cutting the second CMC ply at a helix angle.

The method of any preceding clause, wherein, after cutting the second CMC ply at the helix angle, the second CMC ply is aligned perpendicularly to and wrapped around the body portion such that, after defining the plurality of threads in the thread portion, the plurality of threads retain an uncut portion of the second plurality of continuous fibers extending in the helix about the body portion along at least a portion of the body length.

The method of any preceding clause, wherein the body portion defines a first end and a second end opposite the first end along the body length, and further comprising, prior to processing the body portion and the thread portion, defining a head at the first end.

The method of any preceding clause, wherein defining the head at the first end comprises swaging the body portion to define a head having a conical shape with a recess therein, and further comprising filling the recess with a ceramic material.

The method of any preceding clause, wherein the ceramic material is a monolithic ceramic.

The method of any preceding clause, further comprising, prior to processing the body portion and the thread portion, defining an interlock feature at the second end.

The method of any preceding clause, wherein processing the body portion and the thread portion comprises thermally processing the body portion and the thread portion.

The method of any preceding clause, wherein processing the body portion and the thread portion further comprises, after thermally processing the body portion and the thread portion, infiltrating the body portion and the thread portion with an infiltrant.

A ceramic matrix composite (CMC) fastener comprising a CMC material forming a body portion comprising a first plurality of continuous fibers disposed in a first matrix, the body portion defining a first end and a second end opposite the first end along a body length, the body portion including a head formed at the first end and a shank extending from the head along the body length, wherein the head is swaged at the first end of the body portion.

The CMC fastener of any preceding clause, wherein the body portion further includes an interlock feature swaged at the second end of the body portion such that the shank extends between the head and the interlock feature.

A ceramic matrix composite (CMC) fastener comprising a first CMC material forming a body portion; and a second CMC material forming a thread portion comprising a second plurality of continuous fibers disposed in a second matrix, wherein the body portion has a body length in an axial direction, and wherein the second plurality of continuous fibers is wound in a helix about the body portion such that the second plurality of continuous fibers wrap about the first plurality of continuous fibers along the axial direction.

The CMC fastener of any preceding clause, wherein the first CMC material comprises a first plurality of continuous fibers disposed in a first matrix, the first plurality of continuous fibers extending along the body length in the axial direction.

The CMC fastener of any preceding clause, wherein the body portion defines a first end and a second end opposite the first end along the body length, and wherein the body portion includes a head swaged at the first end and a shank extending from the head along the body length.

The CMC fastener of any preceding clause, wherein a plurality of threads are defined in the thread portion, and wherein the plurality of threads are machined into the thread portion such that at least a portion of the second plurality of continuous fibers remain unbroken and wound in the helix about the body portion along at least a portion of the body length.

A ceramic matrix composite (CMC) fastener system comprising a CMC fastener comprising a first CMC material forming a body portion comprising a first plurality of continuous fibers disposed in a first matrix; a second CMC material forming a thread portion comprising a second plurality of continuous fibers disposed in a second matrix, wherein the body portion has a body length in an axial direction and the first plurality of continuous fibers extend along the body length in the axial direction, and wherein the thread portion is wound in a helix about the body portion such that the second plurality of continuous fibers wrap about the first plurality of continuous fibers along the axial direction; and a CMC threaded nut comprising a third CMC material, the third CMC material forming a nut body receivable on the thread portion of the CMC fastener.

The CMC fastener assembly of any preceding clause, wherein the nut body has a hollow cylinder shape including an outer surface and an inner surface, and wherein a plurality of nut threads are defined on the inner surface.

The CMC fastener assembly of any preceding clause, wherein the CMC thread nut is formed from a panel of the third CMC material, the panel comprising a 0/90 ply layup.

The CMC fastener assembly of any preceding clause, wherein the 0/90 ply layup is formed from pieces of a unidirectional tape or from pieces of a woven fabric prepreg.
This written description uses examples to disclose the present disclosure, including the best mode, and also to enable any person skilled in the art to practice the disclosure, including making and using any devices or systems and performing any incorporated methods. The patentable scope of the disclosure is defined by the claims and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A ceramic matrix composite (CMC) fastener (101), comprising:
a first CMC material forming a body portion (106) comprising a first plurality of continuous fibers (124) disposed in a first matrix; and
a second CMC material (121) forming a thread portion (108) comprising a second plurality of continuous fibers disposed in a second matrix,
wherein the body portion has a body length (110) in an axial direction, and
wherein the second plurality of continuous fibers is wound in a helix about the body portion such that the second plurality of continuous fibers wrap about the first plurality of continuous fibers along the axial direction.

2. The CMC fastener of claim 1, wherein the first plurality of continuous fibers extend along the body length in the axial direction.

3. The CMC fastener of any preceding claim, wherein the body portion defines a first end (112) and a second end (114) opposite the first end along the body length, and wherein the body portion includes a head (116) formed at the first end and a shank (118) extending from the head along the body length.

4. The CMC fastener of any preceding claim, wherein the head is swaged at the first end of the body portion.

5. The CMC fastener of any preceding claim, wherein the head has a hollow conical shape defining a recess (128), and wherein the recess is filled with a ceramic material.

6. The CMC fastener of any preceding claim, wherein the body portion further includes an interlock feature (250) swaged at the second end of the body portion such that the shank extends between the head and the interlock feature.

7. The CMC fastener of any preceding claim, wherein the first CMC material is the same as the second CMC material.

8. The CMC fastener of any preceding claim, wherein a plurality of threads (120) are defined in the thread portion, and wherein the plurality of threads are machined into the thread portion such that at least a portion of the second plurality of continuous fibers remain unbroken and wound in the helix about the body portion along at least a portion of the body length.

9. The CMC fastener of any preceding claim, wherein the CMC fastener is part of a CMC fastener system, the CMC fastener system further including a CMC threaded nut (204) comprising a third CMC material, the third CMC material forming a nut body receivable on the thread portion of the CMC fastener.

10. A ceramic matrix composite (CMC) fastener (101), comprising:
a CMC material forming a body portion (106) comprising a first plurality of continuous fibers disposed in a first matrix, the body portion defining a first end (112) and a second end (114) opposite the first end along the body length, the body portion including:
a head (116) formed at the first end, and
a shank (118) extending from the head along the body length,
wherein the head is swaged at the first end of the body portion.

11. The CMC fastener of claim 10, wherein the body portion further includes an interlock feature (250) swaged at the second end of the body portion such that the shank extends between the head and the interlock feature.
